## Europäisches Patentamt

## European Patent Office

## Office européen des brevets

(19)

(11) Veröffentlichungsnummer: **0 097 827**
**B1**

(12)

# EUROPÄISCHE PATENTSCHRIFT

(45) Veröffentlichungstag der Patentschrift:
20.07.88

(21) Anmeldenummer: **83105410.1**

(22) Anmeldetag: **01.06.83**

(51) Int. Cl.⁴: **G 01 N 27/06**

(54) **Reinheitskontrolle durch Messung der elektrischen Leitfähigkeit.**

(30) Priorität: **28.06.82 DE 3224016**

(43) Veröffentlichungstag der Anmeldung:
**11.01.84 Patentblatt 84/2**

(45) Bekanntmachung des Hinweises auf die Patenterteilung:
**20.07.88 Patentblatt 88/29**

(84) Benannte Vertragsstaaten:
**AT BE CH FR GB LI LU NL**

(56) Entgegenhaltungen:
**US-A-2 183 584**
**US-A-2 909 483**
**US-A-4 068 162**

**Die Akte enthält technische Angaben, die nach
dem Eingang der Anmeldung eingereicht wurden
und die nicht in dieser Patentschrift enthalten sind.**

(73) Patentinhaber: **Akzo GmbH, Postfach 10 01 49
Kasinostrasse 19- 23, D-5600 Wuppertal- 1 (DE)**

(72) Erfinder: **Jünger, Rudolf, Dipl.- Ing., Hauptstrasse
8, D-5166 Kreuzau (DE)**

## Beschreibung

Die vorliegende Erfindung betrifft ein Verfahren und eine Vorrichtung zur Kontrolle des Reinheitsgrades metallischer Oberflächen von Behältern, Geräten oder Rohrleitungen. Die Erfindung ist vor allem in den Fällen von Interesse, in denen die Reinheit an unzugänglichen bzw. nicht sichtbaren Stellen, also an den Innenwänden derartiger Behälter, Geräte oder Rohre kontrolliert werden soll. Vielfach wird in der Praxis wegen der Unmöglichkeit der visuellen Einsichtnahme bzw. der Umständlichkeit einer Kontrolle an derartigen Innenflächen sogar auf eine Kontrollmaßnahme überhaupt verzichtet. Reinheit wird in diesen Fällen einfach aus der Erfahrung vorausgesetzt, daß im allgemeinen nach der Reinigungsmaßnahme unter definierten Bedingungen der Behälter, das Gerät oder Rohr gereinigt zu sein pflegt. In den Fällen, in denen man auf eine Reinheitskontrolle nicht verzichten will, sind folgende Maßnahmen ergriffen worden:

- Untersuchung der Waschflüssigkeit nach Austritt aus dem zu reinigenden Gerät, wobei diese Flüssigkeit visuell oder durch exakte analytische Methoden beurteilt wird.

- Ermittlung der Verunreinigung durch Rückwägung ("Seifen, Fette, Öle, Wachse" 1953, 488 - 489, 514 - 516, 540 - 542, 568 - 569, 597 - 599, 622 - 625, 645 - 647).

- Registrierung radioaktiver Reststrahlung aus der mit Tracer-Substanz versetzten Verunreinigung ("Fette, Seifen, Anstrichmittel" 80 (1978), 43 - 50, 80 - 85, 118 - 124).

Die Nachteile derartiger Maßnahmen liegen auf der Hand: Entweder kann der Reinheitsgrad nur grob abgeschätzt bzw. aufgrund der Grenze analytischer Meßmethoden im Bereich geringer Mengen nicht mehr ermittelt werden. Zum anderen sind diese Maßnahmen umständlich, zeitaufwendig oder sogar bedenklich (letzteres z. B. im Falle radioaktiver Registrierung). Umständlich und zeitaufwendig sind beispielsweise Reinigungsprozesse, bei denen es auf unbedingte Sauberkeit der Innenwände ankommt, wie z. B. bei der Lagerung oder Verarbeitung von Lebensmitteln oder Getränken. Hier muß zur Sicherheit der Reinigungsvorgang stark verlängert durchgeführt werden, damit absolute Sauberkeit garantiert ist.

Bekannt ist ferner eine Maßnahme, die im Reinigungsvorgang von Verunreinigungen freigelegte Metallfläche über den Beitrag dieser freigelegten Metallfläche an der Leitfähigkeit eines elektrolytischen Systems zu ermitteln. So wird gemäß "Deutsche Textiltechnik" 10 (1960), 589 - 593 eine standardisierte Fettverunreinigung auf zwei Platindrähten aufgetragen und die Abnahme der Oberflächenbedeckung durch diskontinuierliche Messung der elektrolytischen Leitfähigkeit zwischen zwei Platindrähten verfolgt, wobei der Widerstand mit einer Wheatston'schen Brückenschaltung gemessen wird. Als anzustrebende Idealanordnung für diese Methode wird eine "selbstschreibende Meßbrücke" erwähnt. Wegen der Beschänkung auf Flüssigkeiten mit schlecht leitenden anionischen oder sogar nicht-ionogenen Tensiden muß ein Elektrolyt zugesetzt werden wodurch das Reinigungsergebnis beeinflußt werden kann (z. B. hei polyphosphathaltigen Reinigungsmitteln). Eine Ausdehnung des Verfahrens auf andere Metalle als Platin, wie z. B. das im Behälter-, Geräte- und Rohrleitungsbau übliche VA und Aluminium wird nicht erwähnt

In der US-A-4 068 162 wird eine Leitfähigkeitszelle beschrieben, welche, wie der Figur 1 der zitierten Patentschrift zu entnehmen ist, in einen Reinigungstank eingetaucht wird. Sie besteht im wesentlichen aus zwei Elektroden, wobei die eine ringförmig ist, die andere einen Bolzen darstellt, der vorzugsweise die Form eines abgestumpften Kegels hat. Diese zweite Elektrode kann in der Leitfähigkeitszelle koaxial zu der ersten schleifförmigen Elektrode bewegt werden.

Demgegenüber sind die Vorrichtungen gemäß der Erfindung völlig anders gestaltet und arbeitet auch das Verfahren zur Kontrolle des Reinigungsvorgangs nach einem anderen Prinzip, d.h. nicht unter Verwendung von Meßzellen derart, wie sie in der US-A-4 068 162 beschrieben werden.

Es bestand daher ein Bedürfnis nach einer vorteilhafteren Vorrichtung und einem Verfahren zur Reinheitskontrolle an metallischen Flächen, das die oben genannten Nachteile nicht aufweist, das vor allem schnell, kontinuierlich, zuverlässig und universell für die verschiedenen Metalle und eine Vielzahl von Waschmitteln und Reinigungsvorgängen unterschiedlichster Verschmutzungen anwendbar ist.

Diese Aufgabe wird gelöst durch eine Vorrichtung, wie sie in einem der Patentansprüche 1 bis 11 beschrieben wird. Zur Lösung der Aufgabe dienen ferner Verfahren nach einem der Ansprüche 12 bis 21.

Das Verfahren wird bevorzugt so durchgeführt, daß man den Reinigungsvorgang solange aufrecht erhält, bis mindestens 90, 95, ja sogar 99 % derjenigen Leitfähigkeit erreicht wird, welche zuvor mit unverschmutzten Elektroden gemessen wurde. Die zu erreichende Endleitfähigkeit hängt hauptsächlich vom Einsatzzweck des Behälters, Rohres oder Gerätes ab. Beispielsweise werden in der Lebensmittelverarbeitung Leitfähigkeitswerte von etwa 99 % des Leitfähigkeitswertes der unverschmutzten Elektrode angestrebt.

Die im erfindungsgemäßen Verfahren gemessenen Leitfähigkeits-Werte der Reinigungsflüssigkeiten liegen bevorzugt in einem Bereich zwischen 5 und 200 mS:cm$^{-1}$, besonders bevorzugt in einem Bereich zwischen 5 und 100 mS:cm$^{-1}$ und ganz besonders bevorzugt in einem Bereich zwischen 5 und 80 mS·cm$^{-1}$ Übliche Reinigungsflüssigkeiten in der Lebensmittelindustrie besitzen Leitfähigkeitswerte zwischen 20 und 80 mS·cm$^{-1}$.

Die im erfindungsgemäßen Verfahren zu verwendenden Reinigungsflüssigkeiten können beispielsweise aus folgenden Grundkomponenten zusammengesetzt sein:

Anorganische Substanzen (Laugen, Säuren, Salze) als Hauptbestandteil, Sequestriermittel, Tenside.

Die Temperatur der Reinigungsflüssigkeit liegt bevorzugt im Bereich der Betriebstemperatur; das ist die Temperatur die beim Betreiben der Behälter oder Rohre zu dem dafür vorgesehenen Verwendungszweck eingehalten werden soll. Bevorzugt sind Temperaturen der Reinigungsflüssigkeit oberhalb der Schmelztemperatur der Verunreinigung.

Bevorzugt wird das erfindungsgemäße Verfahren mit einer Vorrichtung durchgeführt, in der in die Wand des Behälters oder des Rohres eine Metallplatte isoliert eingebettet ißt, oder in der auf die Wand des Behälters oder Rohres eine Metallplatte isoliert aufgeklebt ist, wobei jeweils die Metallplatte die eine und die Behälter- bzw. Rohrwand die andere Elektrode ist. Zur Einbettung der Metallplatte in die Wand kann ein Kunstharz verwendet werden.

Das Material der beiden Metallelektroden der erfindungsgemäßen Vorrichtung kann im Hinblick auf die elektrochemische Spannungsreihe gleich oder verschieden sein. Bevorzugt werden Elektroden aus demselben Material eingesetzt.

Bei Verwendung unterschiedlichen Elektrodenmaterials werden bevorzugt Metalle mit einer Potential-Differenz von höchstens 10 mV eingesetzt.

Ebenso können die beiden Metallelektroden im Hinblick auf ihre Oberflächenrauhigkeit gleich oder verschieden sein. Im Falle unterschiedlicher Oberflächenrauhigkeit kann die kleinere Elektrode sowohl eine größere als auch eine kleinere Rauhtiefe als die größere Elektrode aufweisen. Das wird davon abhängen, ob die jeweiligen Schmutzteilchen bei einer größeren Rauhtiefe oder bei einer geringeren Rauhtiefe besser haften. Aus Gründen der Repräsentativität der Reinheitskontrolle sollte die kleinere Elektrode bevorzugt so beschaffen sein, daß an ihr die Schmutzteilchen stärker haften als an der größeren Elektrode (Behälter- oder Rohrwand).

Das Verhältnis der Oberflächengröße beider Elektroden zueinander hat praktisch keinen Einfluß auf die Genauigkeit der Leitfähigkeits-Messung.

Die Reinheitskontrolle ist umso repräsentativer, je größer die Fläche der Meßelektrode ist. Allerdings nimmt mit zunehmender Fläche der Meßelektrode die Genauigkeit der Messung ab.

Die Fläche der Meßelektrode sollte mindestens gleich oder größer als die abzulösenden Schmutzteilchen sein. Dies gilt insbesondere dann, wenn der Reinigungsprozeß nicht aus einem gleichmäßigen Ablösen oder Abemulgieren der Verunreinigungen besteht, sondern zunächst in einem Unterwandern dieser Verunreinigungen durch die Reinigungsflüssigkeit, und schließlich im Abheben von der Wandung durch mechanische Einflüsse als Schmutzteilchen. Bevorzugt sollte die Fläche der kleineren Elektrode größer als die durchschnittliche Fläche der sich derart ablösenden Schmutzteilchen sein. Besonders bevorzugt sollte die Fläche der kleineren Elektrode zwischen 5 und 50 mal größer als die durchschnittliche Fläche der sich ablösenden Schmutzteilchen sein.

Es ist vorteilhaft, wenn sich die Meßelektrode am Ort der stärksten Verschmutzung des Behälters oder des Rohres befindet. Der Ort größter Verschmutzung kann beispielsweise der Boden des Behälters oder die Grenzzone zwischen Flüssigkeit und darüber befindlichem Gasraum oder zwischen zwei nicht mischbaren Flüssigkeiten sein.

Im Falle einer schwallenden Beaufschlagung des Behälters oder Rohres mit Reinigungsflüssigkeit sind Stärke und Gleichförmigkeit der Schwallschicht nicht kritisch. Schwankungen der Leitfähigkeit, die durch den Arbeitsrhytmus der Beaufschlagungsvorrichtung auftreten, können in bekannter Weise durch einen Kompensator im Meßkreis weitgehend gedämpft werden, wodurch eine Beruhigung der Meßwertanzeige erfolgt.

Das erfindungsgemäße Verfahren zur Reinheitskontrolle durch Messung der elektrischen Leitfähigkeit zeichnet sich dadurch aus, daß es kontinuierlich, schnell, zuverlässig und universell für verschiedene Behälter- und Rohr-Materialien, unterschiedlichste Verschmutzungen und eine Vielzahl von Waschflüssigkeiten anwendbar ist.

Das Verfahren eignet sich nicht nur zur Feststellung des Endpunkts eines Reinigungsprozesses, der erreicht ist, wenn derjenige Leitfähigkeits-Wert gemessen wird, der mit sauberen Elektroden erhalten wurde. Vielmehr kann auch der gesamte Reinigungsprozeß messend verfolgt werden, so daß aus den resultierenden Leitfähigkeitskurven Hinweise auf Besonderheiten des Reinigungsprozesses, der verwendeten Reinigungsflüssigkeiten oder der Verschmutzungen gegeben werden können.

Somit kann z. B. schnell der Gebrauchswert verschiedener Waschmittel ermittelt werden, was insbesondere von großem Interesse für die Konzipierung neuer Waschmittel bzw. neuer Anwendungen bekannter Reinigungsmittel oder für die Demonstration der Leistungsfähigkeit von Reinigungsmitteln gegenüber Kunden ist.

Im allgemeinen wird in einem Reinigungsprozeß, der zur völligen Beseitigung der Verunreinigungen führt, am Ende des Prozesses ein Leitfähigkeits-Wert von max 99 %, bezogen auf mit absolut sauberen Elektroden gemessene Leitfähigkeit der verunreinigten Lösung, erreicht. Der Leitfähigkeits-Wert der sauberen Elektrode sollte mit einer Reinigungsflüssigkeit ermittelt werden, welche möglichst dieselbe Menge an Verunreinigungen bei derselben Temperatur enthält, die nach Beendigung des beabsichtigten Reinigungsverfahrens in der Reinigungsflüssigkeit im allgemeinen vorliegt. Der Wert von 99 % ist deshalb kaum zu überschreiten, weil bei normalen Reinigungsvorgängen letzte Verunreinigungen von der Oberfläche stark adsorbiert werden.

Sind zur Kontrolle der Reinigungsflüssigkeit bereits Meß-Elektroden eingebaut, so wird der Reinigungsvorgang so lange aufrechterhalten, bis der mit den Meß-Elektroden gemessene Leitfähigkeits-Wert demjenigen Wert entspricht, welcher zwischen den beiden, zur Kontrolle des Reinigungsvorgangs vorgesehenen Elektroden gemessen wird.

Eine Besonderheit während eines Reinigungsprozesses, die durch das erfindungsgemäße Verfahren festgestellt werden kann, ist z. B. der Effekt einer Rückverschmutzung durch chemische Umwandlung bereits entfernter Schmutzprodukte und deren erneutes Aufziehen auf die Elektroden.

Mit dem erfindungsgemäßen Verfahren kann auch der sich an den Reinigungsprozeß anschließende Spülvorgang zur Entfernung der Reinigungsflüssigkeit verfolgt werden (Leitfähigkeitsabnahme).

Aufgrund dieser Vorteile ist das erfindungsgemäße Verfahren zur Reinheitskontrolle in besonderem Maße für Anwendungen auf dem Getränke- und Lebensmittel-Sektor geeignet, auf dem an die Reinheit höchste Anforderungen gestellt werden. Hier werden im allgemeinen stark alkalische und saure Reinigungsflüssigkeiten angewandt.

Die Erfindung wird durch die folgenden Versuchsbeispiele und Figuren näher erläutert.
Es zeigen:
Figur 1 die Vorderansicht eines Versuchstanks
Figur 2 den Schnitt AA durch den Versuchstank nach Figur 1

**Beispiel 1**

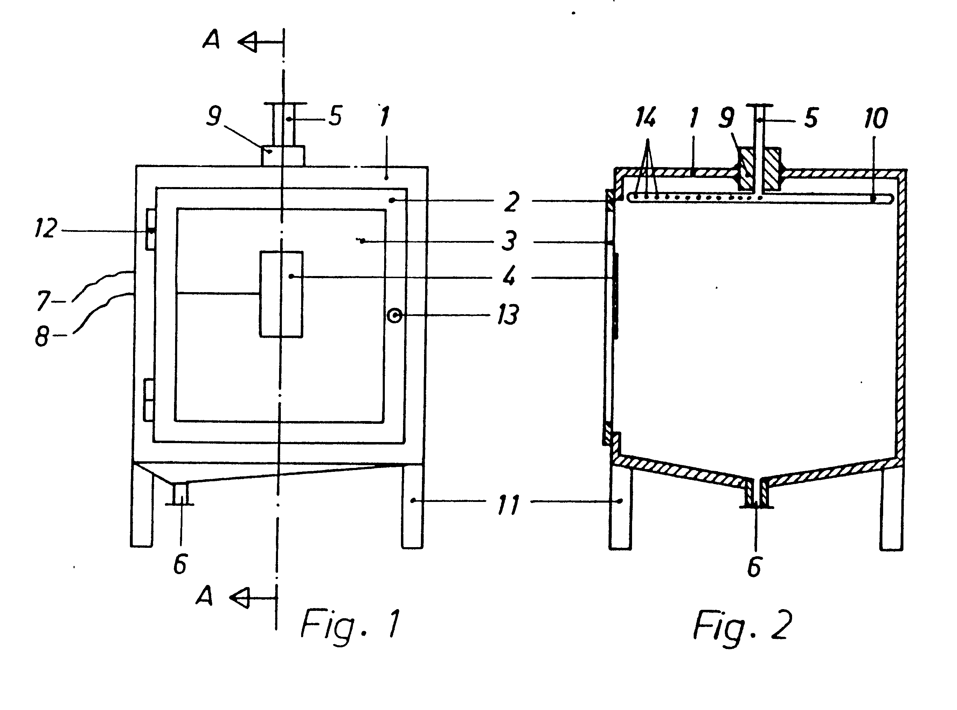

Um den Reinigungsablauf an Tankwänden von Verschmutzung unterschiedlicher Herkunft verfolgen zu können, wurde ein Versuchstank 1 gemäß Figur 1 und Figur 2 eingesetzt. Der Versuchstank 1, welcher auf Füßen 11 steht, hat auf der Vorderseite eine Tür 2, die über Scharniere 12 mit dem Versuchstank 1 verbunden und über den Türverschlußgriff 13 verschließbar ist. In die Tür 2 ist eine Klarscheibe 3 eingesetzt, wodurch eine Beobachtung des Tankinnenraums möglich ist. Auf die Innenseite der Glasscheibe 3 ist eine Elektrode 4 aufgeklebt, welche ebenso wie der Versuchstank 1 und die Tür 2 aus VA besteht. Ebenso ist die Oberflächenbeschaffenheit der Elektrode 4 und der Innenwände des Versuchstanks 1 identisch. Ober elektrisch leitende Kabel 7 bzw. 8 sind der Versuchstank 1 zum einen und die Elektrode 4 zum anderen mit einem Leitfähigkeitsmeßgerät verbunden.

Über an sich bekannte Mittel wurden die Tankinnenwände und die Türinnenwand mit Reinigungsflüssigkeit schwallend beaufschlagt. Hierbei wird die Reinigungsflüssigkeit über das Reinigungsflüssigkeitszuführrohr 5 einem drehbaren Sprührohr 10 zugeführt. Das Sprührohr 10 hat seitlich nach oben gerichtete Austrittslöcher 14, durch welche die Reinigungsflüssigkeit in das Tankinnere eingespritzt wird. Die Reinigungsflüssigkeit wird über eine nicht dargestellte Pumpe und eine ebenso nicht dargestellte Leitung der Zuführung 5 zugeführt, während das Sprührohr 10 durch einen nicht dargestellten Motor um die Achse der Zuführung 5 gedreht wird. Die Zuführung 5 mit dem Sprührohr 10 ist hierzu in einem Lager 9 drehbar gelagert. Die Reinigungsflüssigkeit wird auf dem Boden des Versuchstanks 1 gesammelt und über den Ablaßstutzen 6 abgeführt.

Zur Durchführung einer Reinigung von mit Hopfenharz verschmutzten Wänden wurde als Reinigungsflüssigkeit inhibierte Phosphorsäure, Phosphonsäure, Tenside und Entschäumer als stabile Mischung in Wasser bei Konzentrationen von 1 % (entsprechend 7 mS·cm$^{-1}$) bis 3 % (entsprechend 21 mS·cm$^{-1}$) verwendet.

Nun wurde zuerst die noch unverschmutzte Elektrode 4 auf die Glasscheibe 3 des Versuchstanks 1 mit einem Kunstharz aufgeklebt. Sowohl Tankwände als auch die Elektrode 4 bestanden aus VA. Die Oberfläche der Tankwände und der Elektrode 4 hatte dieselbe Rauhtiefe. Bei der schwallenden Beaufschlagung mit der o.g. 1 %-igen Reinigungsflüssigkeit wurde eine Leitfähigkeit von 7 mS·cm$^{-1}$ bei 20°C festgestellt. Dieser Leitfähigkeitsmeßwert wurde als der Wert der unverschmutzten Elektrode registriert.

Nun wurde die aus dem Versuchstank wieder entfernte Elektrode 4, die 10 cm lang, 5 cm breit und 1 mm dick war, mit Hopfenharz-Extrakt auf folgende Weise beschichtet:
- Verdünnung des Hopfenharzextraktes mit Methanol im Verhältnis 1 : 1,
- Auftragen der Verdünnung auf die Elektrode 4 mit einem Pinsel,
- Trocknen des Auftrages ein Tag bei Raumtemperatur.

Nachdem die Elektrode 4 wieder auf die Glasscheibe 3 geklebt war, wurden mit der Reinigungsflüssigkeit die Tankwände und die verschmutzte Elektrode 4 schwallend beaufschlagt. Der zu Beginn der Reinigung gemessene Leitfähigkeits-Wert betrug praktisch 0 mS·cm$^{-1}$ bei 20°C und stieg kontinuierlich innerhalb einer Stunde auf ca. 6,9 mS·cm$^{-1}$, worauf der Reinigungsvorgang beendet wurde. Die Elektrode hatte daraufhin das ursprüngliche blanke Aussehen.

Anschließend wurden die Tankwände und die Elektrode 4 mit Wasser bespült, bis der Leitfähigkeits-Wert auf 0 mS·cm$^{-1}$ abgesunken

war.

Dieser Versuch zeigt deutlich, daß mit dem der Erfindung zugrunde liegenden Verfahren der Reinigungsverlauf, das Reinigungsergebnis und der darauf folgende Spülvorgang sehr vorteilhaft, insbesondere wirtschaftlich, kontrolliert werden können.

**Beispiel 2**

Bei der Reinigung von Bierfässern findet in der Regel ein Spritzkopf mit Düseneinsätzen Verwendung, welcher von unten in das Faß eingeführt wird. Mit dem in das Faß eingeführten Spritzkopf kann die Innenwand des Fasses allseitig mit Reinigungsflüssigkeit beaufschlagt werden, welche mit dem abgelösten Schmutz nach unten abfließt. Überwiegend bestehen die Bierfässer aus Aluminium.

Zur Reinigung von Aluminium-Bierfässern wird nun ein aus VA bestehender Spritzkopf, welcher am Ende eines elektrisch nicht leitenden Polyäthylenrohres befestigt ist, als die eine und das Aluminium-Faß als die andere Elektrode verwendet. Der Spritzkopf ist über einen elektrisch leitenden Draht mit dem Leitfähigkeitsmeßgerät verbunden. Das Faß wird auf elektrisch leitende Kontakte gestellt, welche ebenfalls mit dem Leitfähigkeitsmeßgerät leitend verbunden sind.

Zur Bestimmung des Leitfähigkeits-Wertes der sauberen Elektrode wird der Spritzkopf in ein sauberes Faß eingeführt und die Wände mit Reinigungsflüssigkeit bei für die Reinigung üblicher Temperatur beaufschlagt.

Während der Reinigung eines verschmutzten Aluminium-Bierfasses wird nun der Leitfähigkeits-Wert gemessen und der Reinigungsvorgang solange fortgesetzt, bis der Leitfähigkeits-Wert der sauberen Elektrode nahezu erreicht ist.

Diese Art der Kontrolle des Reinigungsvorganges läßt sich besonders günstig bei automatischen Faßreinigungsmaschinen mit mehreren Reinigungs- und Spülstationen durchführen, wobei die Leitfähigkeits-Werte jeweils an der letzten Reinigungs- und an der letzten Spülstation gemessen werden. Der Weitertransport der Fässer erfolgt jeweils dann, wenn beide vorgegebenen Leitfähigkeits-Werte erreicht sind.

**Patentansprüche**

1. Vorrichtung zur Durchführung eines Verfahrens zur Kontrolle des Reinigungsvorganges von aus Metall bestehenden Innenwänden von Behältern oder Rohren durch Befluten oder Schwallendes Beaufschlagen der Innenwände mit hochalkalischen oder hochsauren Reinigungsflüssigkeiten und Messung der elektrischen Leitfähigkeit der Reinigungsflüssigkeit zwischen zwei Elektroden, dadurch gekennzeichnet, daß die Behälter- bzw. Rohrwand aus zwei gegeneinander elektrisch isolierten Teilen aus Metall besteht, welche als Elektroden mit einem Leitfähigkeitsmeßgerät leitend verbunden sind.

2. Vorrichtung nach Anspruch 1, dadurch gekennzeichnet, daß eine Metallplatte in die Behälter- bzw. Rohrwand isoliert eingebettet ist, wobei die Metallplatte die eine und die Behälter- bzw. Rohrwand die andere Elektrode ist.

3. Vorrichtung nach Anspruch 1, dadurch gekennzeichnet, daß eine Metallplatte isoliert auf die Behälter- bzw. Rohrwand aufgeklebt ist, wobei die Metallplatte die eine und die Behälterwand die andere Elektrode ist.

4. Vorrichtung nach einem oder mehreren der Ansprüche 1 bis 3, dadurch gekennzeichnet, daß zwischen dem Material der einen und dem Material der anderen Elektrode höchstens eine Potentialdifferenz von 10 mV besteht.

5. Vorrichtung nach einem oder mehreren der Ansprüche 1 bis 4, dadurch gekennzeichnet, daß beide Elektroden aus demselben Material bestehen.

6. Vorrichtung nach einem oder mehreren der Ansprüche 1 bis 5, dadurch gekennzeichnet, daß die beiden Elektroden als eine größere und eine kleinere Elektrode ausgebildet sind und die Oberfläche der kleineren Elektrode eine größere Rauhtiefe als die größere Elektrode aufweist.

7. Vorrichtung nach einem oder mehreren der Ansprüche 1 bis 5, dadurch gekennzeichnet, daß die beiden Elektroden als eine größere und eine kleinere Elektrode ausgebildet sind und die Oberfläche der kleineren Elektrode eine geringere Rauhriefe als die der größeren Elektrode aufweist.

8. Vorrichtung nach einem oder mehreren der Ansprüche 1 bis 7, dadurch gekennzeichnet, daß die Fläche der kleineren Elektrode größer als die durchschnittliche Fläche der sich ablösenden Schmutzteilchen ist.

9. Vorrichtung nach einem oder mehreren der Ansprüche 1 bis 8, dadurch gekennzeichnet, daß die Fläche der kleineren Elektrode zwischen 5 und 50 mal größer als die durchschnittliche Fläche der sich ablösenden Schmutzteilchen ist.

10. Vorrichtung nach einem oder mehreren der Ansprüche 1 bis 9, dadurch gekennzeichnet, daß die kleinere Elektrode im Bereich der größten Verschmutzung liegt.

11. Vorrichtung zur Kontrolle des Reinigungsvorganges von aus Metall bestehenden Innenwänden von Behältern durch Befluten oder schwallendes Beaufschlagen der Innen-Wände mit hochalkalischen oder hochsauren Reinigungsflüssigkeiten und Messung der elektrischen Leitfähigkeit der Reinigungsflüssigkeit zwischen zwei Elektroden, dadurch gekennzeichnet, daß die Behälterwand die eine Elektrode bildet und ein in den Behälter eingeführter Spritzkopf, der zum Befluten oder schwallenden Beaufschlagen der Innenwände dient, die andere Elektrode bildet und beide Elektroden gegeneinander elektrisch isoliert sind und mit einem Leitfähigkeitsmeßgerät leitend verbunden sind.

12. Verfahren zur Kontrolle des Reinigungsvorganges von aus Metall bestehenden Innenwänden von Behältern oder Rohren durch Befluten oder schwallendes Beaufschlagen mit hochalkalischen oder hochsauren Reinigungsflüssig keiten unter Verwendung einer Vorrichtung nach einem oder mehreren der Ansprüche 1 bis 10 wobei man während der gleichzeitigen Beflutung oder schwallenden Beaufschlagung beider Elektroden die Leitfähigkeit der Reinigungsflüssigkeit zwischen beiden Elektroden mißt und den Reinigungsvorgang solange aufrechterhält, bis diejenige Leitfähigkeit weitgehend erreicht wird, welche zuvor mit unverschmutzten Elektroden gemessen wurde.

13. Verfahren nach Anspruch 12, dadurch gekennzeichnet, daß man den Reinigungsvorgang solange aufrechterhält, bis mindestens 90 % derjenigen Leitfähigkeit erreicht wird, welche zuvor mit unverschmutzten Elektroden gemessen wurde.

14. Verfahren nach den Ansprüchen 12 oder 13, dadurch gekennzeichnet, daß man den Reinigungsvorgang solange aufrechterhält, bis mindestens 95 % derjenigen Leitfähigkeit erreicht wird, welche zuvor mit unverschmutzten Elektroden gemessen wurde.

15. Verfahren nach den Ansprüchen 12, 13 oder 14, dadurch gekennzeichnet, daß man den Reinigungsvorgang solange aufrechterhält, bis mindestens 99 % derjenigen Leitfähigkeit erreicht wird, welche zuvor mit unverschmutzten Elektroden gemessen wurde.

16. Verfahren nach einem oder mehreren der Ansprüche 12 bis 15, dadurch gekennzeichnet, daß die Leitfähigkeits-Werte der Reinigungsflüssigkeiten zwischen 5 und 200 $mS \cdot cm^{-1}$ liegen.

17. Verfahren nach einem oder mehreren der Ansprüche 12 bis 16, dadurch gekennzeichnet, daß die Leitfähigkeits-Werte der Reinigungsflüssigkeiten zwischen 5 und 100 $mS \cdot cm^{-1}$ liegen.

18. Verfahren nach einem oder mehreren der Ansprüche 12 bis 17, dadurch gekennzeichnet, daß die Leitfähigkeits-Werte der Reinigungsflüssigkeiten zwischen 5 und 80 $mS \cdot cm^{-1}$ liegen.

19. Verfahren nach einem oder mehreren der Ansprüche 12 bis 18, dadurch gekennzeichnet, daß die Temperatur der Reinigungsflüssigkeit im Bereich der Betriebstemperatur liegt.

20. Verfahren nach einem oder mehreren der Ansprüche 12 bis 18, dadurch gekennzeichnet, daß die Temperatur der Reinigungsflüssigkeit oberhalb der Schmelztemperatur der Verunreinigung liegt.

21. Verfahren zur Kontrolle des Reinigungsvorganges von aus Metallen bestehenden Innenwänden von Behältern durch Befluten oder schwallendes Beaufschlagen mit hochalkalischen oder hochsauren Reinigungsflüssigkeiten, dadurch gekennzeichnet, daß man in den Behälter einen als eine Elektrode ausgebildeten, zur Beflutung oder schwallenden Beaufschlagung dienenden Spritzkopf einführt, der gegenüber der metallischen Innenwand elektrisch isoliert ist und während der gleichzeitigen Beflutung oder schwallenden Beaufschlagung der Innenwand die Leitfähigkeit der Reinigungsflüssigkeit zwischen dem Spritzkopf und der Innenwand mißt und den Reinigungsvorgang solange aufrechterhält, bis diejenige Leitfähigkeit weitgehend erreicht wird, welche zuvor bei unverschmutzter Innenwand gemessen wurde.

**Claims**

1. An apparatus for carrying out a process for monitoring the cleaning of metal inner walls of containers or pipes by flooding or splashing the inner walls with highly alkaline or highly acidic cleaning liquids and measuring the electrical conductivity of the cleaning liquid between two electrodes, characterized in that the container or pipe wall consists of two metal parts electrically insulated from one another which are conductively connected as electrodes to a conductivity measuring instrument.

2. An apparatus as claimed in claim 2, characterized in that a metal plate is embedded in insulated form in the wall of the container or pipe, the metal plate forming one electrode and the container or pipe wall the other electrode.

3. An apparatus as claimed in claim 1, characterized in that a metal plate is bonded in insulated form to the wall of the container or pipe, the metal plate forming one electrode and the container wall the other electrode.

4. An apparatus as claimed in one or more of claims 1 to 3, characterized in that a potential difference of at most 10 mV exists between the material of one electrode and the material of the other electrode.

5. An apparatus as claimed in one or more of claims 1 to 4, characterized in that both electrodes consist of the same material.

6. An apparatus as claimed in one or more of claims 1 to 5, characterized in that the two electrodes are in the form of a larger electrode and a smaller electrode and in that the surface of the smaller electrode has a greater roughness depth than the larger electrode.

7. An apparatus as claimed in one or more of claims 1 to 5, characterized in that the two electrodes are in the form of a larger electrode and a smaller electrode and in that the surface of the smaller electrode has a shallower roughness depth than the larger electrode.

8. An apparatus as claimed in one or more of claims 1 to 7, characterized in that the area of the smaller electrode is larger than the average area of the soil particles detaching themselves from the wall.

9. An apparatus as claimed in one or more of claims 1 to 8, characterized in that the area of the smaller electrode is to 50 times larger than the average area of the soil particles detaching themselves from the wall.

10. An apparatus as claimed in one or more of claims 1 to 9, characterized in that the smaller electrode is situated in the region of greatest soiling.

11. An apparatus for monitoring the cleaning of metal inner walls of containers by flooding or splashing the inner walls with highly alkaline or highly acidic cleaning liquids and measuring the, electrical conductivity of the cleaning liquid between two electrodes, characterized in that the container wall forms one electrode while a spray head inserted into the container to flood or splash the inner walls forms the other electrode and in that both electrodes are electrically insulated from one another and are conductively connected to a conductivity measuring instrument.

12. A process for monitoring the cleaning of metal inner walls of containers or pipes by flooding or splashing with highly alkaline or highly acidic cleaning liquids using the apparatus claimed in one or more of claims 1 to 10, the conductivity of the cleaning liquids being measured between two electrodes during the simultaneous flooding or splashing of both electrodes and the cleaning process being continued until the conductivity previously measured with unsoiled electrodes is largely reached.

13. A process as claimed in claim 12, characterized in that the cleaning process is continued until at least 90 % of the conductivity previously measured with unsoiled electrodes is reached.

14. A process as claimed in claim 12 or 13, characterized in that the cleaning process is continued until at least 95 % of the conductivity previously measured with unsoiled electrodes is reached.

15. A process as claimed in claim 12, 13 or 14, characterized in that the cleaning process is continued until at least 99 % of the conductivity previously measured with unsoiled electrodes is reached.

16. A process as claimed in one or more of claims 12 to 15, characterized in that the conductivity values of the cleaning liquids are between 5 and 200 mS$\cdot$cm$^{-1}$.

17. A process as claimed in one or more of claims 12 to 16, characterized in that the conductivity values of the cleaning liquids are between 5 and 100 mS$\cdot$cm$^{-1}$.

18. A process as claimed in one or more of claims 12 to 17, characterized in that the conductivity values of the cleaning liquids are between 5 and 80 mS$\cdot$cm$^{-1}$.

19. A process as claimed in one or more of claims 12 to 18, characterized in that the temperature of the cleaning liquid is in the region of the operating temperature.

20. A process as claimed in one or more of claims 12 to 18, characterized in that the temperature of the cleaning liquid is above the melting temperature of the soil.

21. A process for monitoring the cleaning of metal inner walls of containers by flooding or splashing with highly alkaline or highly acidic cleaning liquids, characterized in that a spray head used for flooding or splashing which is designed to function as an electrode and which is electrically insulated from the metal inner wall is inserted into the container and the conductivity of the cleaning liquid is measured between the spray head and the inner wall during the simultaneous flooding or splashing of the inner wall and the cleaning process is continued until the conductivity previously measured with the inner wall unsoiled is largely reached.

## Revendications

1. Dispositif pour la mise en oeuvre qu'un procédé de contrôle de l'opération de nettoyage des parois intérieures métalliques de récipients ou de tubes par application sur les parois intérieures, par inondation ou projection, de liquides de nettoyage fortement alcalins ou acides, et par mesure de la conductivité électrique du liquide de nettoyage entre deux électrodes, caractérisé en ce que la paroi du récipient ou du tube est constituée par deux parties métalliques isolées électriquement l'une vis à vis de l'autre, qui sont reliées en tant qu'électrodes de façon conductrice à un appareil de mesure de conductivité.

2. Dispositif selon la revendication 1, caractérisé en ce qu'une plaque métallique est encastrée de façon isolée dans la paroi du récipient ou du tube, la plaque métallique constituant une électrode et la paroi du récipient ou du tube constituant l'autre électrode.

3. Dispositif selon la revendication 1, caractérisé en ce qu'une plaque métallique est collée sur la paroi du récipient ou du tube, la plaque métallique constituant une électrode et la paroi du récipient ou du tube constituant l'autre électrode.

4. Dispositif selon l'une quelconque ou plusieurs des revendications 1 à 3, caractérisé en ce qu'entre le matériau d'une électrode et le matériau de l'autre électrode il existe une différence de potentiel d'au maximum 10 mV.

5. Dispositif selon l'une quelconque ou plusieurs des revendications 1 à 4, caractérisé en ce que les deux électrodes sont constituées par le même matériau.

6. Dispositif selon l'une quelconque ou plusieurs des revendications 1 à 5, caractérisé en ce que les deux électrodes sont realisées comme une électrode plus grande et une électrode plus petite et la surface de l'électrode plus petite présente une profondeur de rugosité supérieure à celle de l'électrode plus grande.

7. Dispositif selon l'une quelconque ou plusieurs des revendications 1 à 5, caractérisé en ce que les ceux électrodes sont realisées comme une électrode plus grande et une électrode plus petite et la surface de l'électrode plus petite présente une profondeur de rugosité inférieure à celle de l'électrode plus grande.

8. Dispositif selon l'une quelconque ou plusieurs des revendications 1 à 7, caractérisé en ce que la surface de l'électrode plus petite est plus grande que la surface moyenne des impuretés qui se détachent.

9. Dispositif selon l'une quelconque ou plusieurs des revendications 1 à 8, caractérisé en ce que la surface de l'électrode plus petite est entre 5 et 50 fois plus grande que la surface moyenne des particules de salissure qui se détachent.

10. Dispositif selon l'une quelconque ou plusieurs des revendications 1 à 9, caractérisé en ce que l'électrode plus petite se trouve dans la zone de la plus grande salissure.

11. Dispositif pour le contrôle de l'opération de nettoyage des parois intérieures metalliques de récipients par application, sur les parois intérieures, par inondation ou projection, de liquides de nettoyage fortement alcalins ou acides, et par mesure de la conductivité électrique du liquide de nettoyage entre deux électrodes, caractérisé en ce que la paroi du récipient forme une électrode et une tête de pulverisation, qui est introduite dans le récipient et sert à appliquer le liquide sur les parois intérieures par inondation ou projection, forme l'autre électrode, et que les deux électrodes sont isolées électriquement l'une vis à vis de l'autre et sont reliées de façon conductrice à un appareil de mesure de conductivité.

12. Procédé pour le contrôle de l'opération de nettoyage des parois intérieures metalliques de récipients ou de tubes par application sur les parois intérieures, par inondation ou projection, de liquides de nettoyage fortement alcalins ou acides en utilisant un dispositif selon l'une quelconque ou plusieurs des revendications 1 à 10, la conductivité du liquide de nettoyage entre les deux électrodes étant mesurée pendant que le liquide est appliqué par inondation ou projection sur les deux électrodes, et l'opération de nettoyage étant maintenue jusqu'a atteindre sensiblement la conductivite qui avait été mesurée auparavant avec des électrodes propres.

13. Procédé selon la revendication 12, caractérisé en ce que l'opération de nettoyage est maintenue jusqu'à atteindre au moins 90 % de la conductivité qui avait été mesurée auparavant avec des électrodes propres.

14. Procédé selon la revendication 12 ou 13, caractérisé en ce que l'opération de nettoyage est maintenue jusqu'à atteindre au moins 95 % de la conductivité qui avait été mesurée auparavant avec des électrodes propres.

15. Procédé selon l'une quelconque des revendications 12, 13 ou 14, caractérisé en ce que l'opération de nettoyage est maintenue jusqu'à atteindre au moins 99 % de la conductivité qui avait été mesurée auparavant avec des électrodes propres.

16. Procédé selon lune quelconque ou plusieurs des revendications 12 à 15, caractérisé en ce que les valeurs de conductivité des liquides de nettoyage se si tuent entre 5 et 200 $mS \cdot cm^{-1}$.

17. Procédé selon l'une quelconque ou plusieurs des revendications 12 à 16, caractérisé en ce que les valeurs de conductivité des liquides de nettoyage se si tuent entre 5 et 100 $mS \cdot cm^1$.

18. Procédé selon lune quelconque ou plusieurs des revendications 12 à 17, caractérisé en ce que les valeurs de conductivité des liquides de nettoyage se si tuent entre 5 et 80 $mS \cdot cm^{-1}$.

19. Procédé selon lune quelconque ou plusieurs des revendications 12 à 18, caractérisé en ce que la température du liquide de nettoyage se si tue dans la plage de la température de fonctionnement.

20. Procédé selon l'une quelconque ou plusieurs des revendications 12 à 18, caractérisé en ce que la température du liquide de nettoyage est supérieure à la température de fusion des salissures.

21. Procédé pour le contrôle de l'opération de nettoyage des parois intérieures métalliques de récipients par application sur les parois intérieures, par inondation ou projection, de liquides de nettoyage fortement alcalins ou acides, caractérisé en ce qu'une tête de pulverisation realisée comme électrode et servant à appliquer le liquide de nettoyage par inondation ou projection, est introduite dans le récipient, cette tête étant isolée électriquement vis à vis de la paroi intérieure métallique, que tout en appliquant le liquide par inondation ou projection sur la paroi intérieure, la conductivité du liquide de nettoyage entre la tête de pulverisation et la paroi intérieure est mesurée et l'opération de nettoyage est maintenue jusqu'à atteindre sensiblement la conductivité qui avait été mesurée auparavant avec des électrodes propres.

A ◁

9 — 5 1

12 —

7 —
8 —

13

6

A ◁

*Fig. 1*

14 1 9 5 10

2

3

4

11

6

*Fig. 2*

0 097 827